# EUROPÄISCHE PATENTSCHRIFT

(11) **EP 0 496 181 B1**
(45) Veröffentlichungstag und Bekanntmachung des Hinweises auf die Patenterteilung: **19.08.1998**
(21) Anmeldenummer: 91810999.2
(22) Anmeldetag: 24.12.1991
(51) Int. Cl.: B23K 9/04

(54) **Verfahren zur Herstellung von metallischen Werkstücken mit einer Schweissvorrichtung und Vorrichtung zur Ausführung desselben**
Method of fabricating metallic workpieces with a welding apparatus, and apparatus for carrying out the method
Méthode de fabrication de pièces métalliques par un appareil de soudage, et appareil pour la mise en oeuvre

(30) Priorität: 21.01.1991 CH 164/91
(43) Veröffentlichungstag der Anmeldung: 29.07.1992
(73) Patentinhaber: Sulzer Hydro AG, 8023 Zürich (CH)
(72) Erfinder: Schneebeli, Fritz, CH-8102 Oberengstringen (CH); Tanner, Bruno, CH-8400 Winterthur (CH); Braun, Olivier, CH-8406 Winterthur (CH); Dekumbis, Roger, CH-8050 Zürich (CH)
(74) Vertreter: Heubeck, Bernhard

(56) Entgegenhaltungen:
- EP-A- 111 057
- EP-A- 233 339
- EP-A- 0 170 780
- DE-U- 8 909 840
- US-A- 4 621 762
- US-A- 4 775 092
- US-A- 4 940 390

## Beschreibung

Die Erfindung betrifft ein Verfahren zur Herstellung von metallischen Werkstücken mit einer Schweissvorrichtung, insbesondere von Werkstücken aus hochvergüteten Materialien, eine Vorrichtung zur Durchführung des Verfahrens und ein dadurch erhältliches Peltonrad.

Es ist bekannt, metallische Werkstücke mit Schweissverfahren, insbesondere mit dem formgebenden Auftragsschweissverfahren herzustellen. Ein solches Verfahren besteht darin, das Schweissmaterial, üblicherweise durch Stäbe oder endlose Drähte zugeführt, in Bahnen schichtweise abzulagern, bis die gewünschte Geometrie des Werkstückes erreicht wird.
Zur Stützung des flüssigen, geschmolzenen Schweissmaterials wird üblicherweise ein metallischer, vorgefertigter Stützkörper verwendet, auf den die erste Schicht aus Schweissmaterial aufgetragen wird. So wird z.B. für ein zylindrisches Werkstück ein Zylinder als Stützkörper verwendet. Der Stützkörper bestimmt somit die generelle Form des Querschnittes eines herzustellenden Werkstückes. Nachteilig wirkt sich aus, dass für jedes Werkstück ein entsprechend geometrisch vorgefertigter Stützkörper notwendig ist, der, da der Stützkörper sich mit den aufgetragenen Schweissmaterialschichten metallisch verbindet, unter Umständen wieder abgetragen werden muss.

US. Pat. No. 4,775,092 verwendet zur Stützung des flüssigen Schweissmaterials eine gekühlte, zylinderförmige Rolle, die nur bis zur Erstarrung des Schweissmaterials stützend wirkt. Ein vorgefertigter Stützkörper wird somit nicht mehr benötigt. Ein entscheidender Nachteil dieses Verfahrens ist jedoch, dass nur axialsymmetrisch ausgebildete Rotationskörper herstellbar sind.

Aus der EP 0 170 780 ist ein Verfahren zur Herstellung von Rotationskörpern aus Schweissgut bekannt, welche als räumlich gekrümmte Bauteile ausgestaltet sind. Dabei ist ein Bauteil mit Aufspannmitteln auf einen Drehtisch aufgespannt. Das auf einen Drehtisch aufgespannte Bauteil rotiert um dessen Rotationsachse, wobei der Auftragsbereich des Bauteils fortlaufend in waagerechter Schweissposition gehalten wird, sodass lagenweise Schweissgut aufgetragen wird und ein rotationskörperförmiges Bauteil entsteht. Ein entscheidender Nachteil dieses Verfahrens ist darin zu sehen, dass ausschliesslich rotationskörperförmige, räumlich gekrümmte Bauteile herstellbar sind.

Bekannte Vorrichtungen zum formgebenden Auftragsschweissen von Werkstücken vermögen kleine als auch grosse und entsprechend schwere Werkstücke herzustellen, die jedoch eine einfache, nämlich eine durch eine Rotation um eine Achse erzeugte Form aufweisen, daher rotationskörperförmig ausgestaltet sind.

Die Aufgabe der vorliegenden Erfindung ist es daher, Schweissmaterialbahnen beliebiger, auch dreidimensionaler Kurvenformen und weitgehend gleichbleibender Beschaffenheit derart abzulagern, dass Werkstücke mit praktisch beliebigen Formen entstehen, wobei kein Stützkörper oder spezieller Manipulator zur Stützung des aufgeschmolzenen Schweissmaterials notwendig ist.

Die Aufgabe wird gemäss der Erfindung mit einem Verfahren, das die Merkmale des unabhängigen Anspruchs 1 umfasst, gelöst. Die abhängigen Ansprüche beziehen sich auf vorteilhafte Formen des Verfahrens. Eine erfinderische Vorrichtung ist durch die Merkmale des unabhängigen Anspruchs 8 gekennzeichnet. Die abhängigen Ansprüche beziehen sich auf vorteilhafte Ausführungsformen der Vorrichtung. Ein erfinderisches Produkt des Verfahrens ist ein Peltonrad, das die Merkmale des unabhängigen Anspruchs 12 umfasst. Der abhängingen Anspruch 13 bezieht sich auf eine vorteilhafte Ausführung des Produkts.

Mit der Lösung dieser Aufgabe wird der Anwendungsbereich des formgebenden Auftragsschweissens erweitert.

Das erfindungsgemässe Verfahren zum formgebenden Auftragsschweissen von Werkstücken, im weiteren auch als Freiformmethode oder Freiformschweissen bezeichnet, wird möglich dank einer Kombination von Auftragsschweisstechnik, Computertechnik und Robotik. Die angewendeten Schweissverfahren als auch die verwendeten metallischen Werkstoffe sind bekannt. Als Schweissverfahren können Lichtbogenschweissverfahren oder Laserstrahlschweissverfahren angewendet werden.

Leistungsfähige CAD-Rechnerprogramme erlauben den Entwurf von komplexen, zwei- oder dreidimensionalen Modellen von Werkstücken, die mit Hilfe der Freiformmethode unmittelbar als metallische Werkstücke herstellbar sind. Das Werkstück wird dabei üblicherweise in einen Basiskörper und eine Vielzahl von Schweissmaterialbahnen zerlegt, die auf dem Basiskörper beginnend aufgetragen werden und somit die Form des Werkstückes ergeben. Der Basiskörper dient als Träger einer ersten Schicht von Schweissmaterial. Das gesamte Werkstück wird auf dem Basiskörper durch die Ablagerung von Schweissmaterialbahnen aufgebaut, wobei der Basiskörper eine vorgefertigte Teilkomponente des endgültigen Werkstückes, z.B. eine Nabe, sein kann oder eine Komponente, z.B. eine Platte, die in einem nachfolgenden Arbeitsgang wieder vom Werkstück getrennt wird. Der Basiskörper und/oder der Schweissmaterial ablagernde Schweissbrenner sind, vorzugsweise mit Hilfe von Robotern, zwei- oder dreidimensional im Raum beweglich. Die Vorgabewerte der Rechneranlage für die Steuer- und Schweissdaten werden einer Anlagensteuerung zugeführt, die den/die Roboter und die Schweissvorrichtung während der Herstellung des metallischen Werkstückes kontinuierlich steuert, überwacht und Abweichungen ausregelt.

Das Freiformschweissen wird ohne das flüssige Schweissmaterial stützende Stützkörper durchgeführt, derart, dass eine neu aufgetragene, flüssige Schweissmaterialbahn auf der darunterliegenden Bahn haftet und unter keinen Umständen abfliesst. Ein vorzugsweise senkrechter Schweissmaterialauftrag auf ein nur wenig gegenüber der Horizontalen geneigtes Bahnelement reduziert die Abfliessgefahr des Schweissmaterials. Die Anlagensteuerung regelt daher kontinuierlich die geometrische Lage der Unterlage einer aufzutragenden Schweissmaterialbahn und/oder die Position des Schweissbrenners, sowie die aufzutragende Schweissmaterialauftragsrate und/oder die Schweissbahngeschwindigkeit. Flächenartige Schichten können z.B. mit grosser Schweissmaterialauftragsrate und z.B. mäandrierenden Schweissbahnen erstellt werden, während z.B. Umrandungen eines Werkstückes, auf Grund der Abfliessgefahr, mit reduzierter Schweissmaterialauftragsrate erstellt werden.

Die Schweissmaterialauftragsrate wird zusätzlich derart geregelt, dass Unregelmässigkeiten bestehender Schweissmaterialbahnen bezüglich Breite und/oder Höhe detektiert und mit der neu aufgetragenen Schweissmaterialbahn ausgeglichen werden. Mit Lichtbogenschweissverfahren können Unregelmässigkeiten relativ einfach durch die Überwachung von Schweissparamtern wie Schweissstrom und Schweissspannung festgestellt werden. Für Laserschweissverfahren sind anspruchsvollere mechanische oder optische Sensoren notwendig, um Unregelmässigkeiten bestehender Schweissmaterialbahen zu detektieren. Dafür können mit Laserschweissverfahren auch stark von der Horizontalen geneigte Schweissbahnen ohne Abfliessgefahr aufgetragen werden, wenn das Schmelzbad klein ist, und somit durch die Oberflächenspannung gehalten wird.

Theoretisch können mit der Freiformmethode beliebig grosse Werkstücke gefertigt werden. Gegenüber dem Gussverfahren weisen durch Auftragsschweissen hergestellte Werkstücke bessere mechanische Eigenschaften auf, da die Abkühlgeschwindigkeit des Metalles besser kontrollierbar ist, und somit homogenere Gefügestrukturen erzielbar sind. Daher lassen sich z.B. auch Werkstücke mit grossen Wandstärkenunterschieden problemloser herstellen als mit dem Gussverfahren. Das Freiformschweissen kann bekannte Verfahren zum Herstellen von metallischen Werkstücken wie Giessen oder Schmieden ersetzen oder in Kombination mit bekannten Verfahren eingesetzt werden.
Ein Werkstück kann aus einem als auch mehreren schweissbaren Metallen und/oder Metallegierungen aufgebaut werden, in dem z.B. nach der Herstellung eines metallischen Füllkörpers eine qualitativ hochwertige, metallische Deckschicht aufgetragen wird. Werkstücke mit kundenspezifischen mechanischen, physikalischen und korrosionsbezogenen Eigenschaften sind herstellbar.
Das erfindungsgemässe Verfahren zum Freiformschweissen eignet sich z.B. für die schnelle Herstellung einzelner, hochvergüteter Werkstücke wie sie im Prototypenbau benötigt werden, für die Reparatur von Werkstücken wie Peltonschaufeln als auch für die Herstellung komplexer Werkstücke wie ganzer Peltonräder.

Mit einer Vorrichtung zum formgebenden Auftragsschweissen wird Schweissmaterial in bahnförmigen Schichten, auf der Oberfläche eines Basiskörpers beginnend, aufgetragen, und somit ein Werkstück gefertigt, wobei der Basiskörper ein Bestandteil des Werkstückes sein kann. Der Verlauf bahnförmiger Schichten sowie die ungefähre Schweissmaterialauftragsrate werden von einer Rechneranlage, ausgehend von einem softwaremässigen, zwei- oder dreidimensionalen Datenmodell des Werkstückes, berechnet und der Anlagensteuerung vorgegeben, welche den Schweissbrenner mit Hilfe des Roboters als auch das auf einer Positioniervorrichtung, ein Drehtisch mit einer Einspannvorrichtung, fixierte Werkstück gegenseitig positioniert und die aufgetragene Schweissmaterialauftragsrate am Schweissgerät derart regelt, dass das flüssige Schweissmaterial auf der darunterliegenden Schicht ohne abzufliessen haftet und Unregelmässigkeiten bahnförmiger Schichten ausgeglichen werden. Somit können metallische Werkstücke mit vielfältigsten Körperformen, theoretisch beliebig gross und mit beliebigen Wandstärken, bestehend auch aus unterschiedlichen metallischen Werkstoffen, ohne Hilfskerne oder andere das flüssige Schweissmaterial stützende Vorrichtungen durch formgebendes Auftragsschweissen gefertigt werden.

Die Erfindung wird nur anhand von Beispielen erläutert, bei denen als Schweissvorrichtung eine Lichtbogenschweissvorrichtung, insbesondere mit Metall-Inert-Gas (MIG), eingesetzt wird. Es versteht sich und ist dem Fachmann unmittelbar einleuchtend und selbstverständlich, dass als Methode zum Auftragsschweissen auch andere Schweissvorrichtungen wie z.B. eine Laserstrahlschweissvorrichtung geeignet ist, indem lediglich ein Sensor zur Bestimmung der gegenseitigen Lage zwischen der Schweissvorrichtung und der Unterlage der aufzutragenden Schweissmaterialbahn zusätzlich verwendet wird.

Im folgenden wird die Erfindung anhand der in den Figuren dargestellten Beispielen näher erläutert.

Es zeigen:
- Fig.1: Schematisch den Aufbau einer Anlage zur Durchführung des neuen Verfahrens;
- Fig.2: eine schematische Seitenansicht eines hergestellten Werkstückes;
- Fig.3: schematisch den Querschnitt eines hergestellten Werkstückes;
- Fig.4: ein schematisches Diagramm des Höhenverlaufes von Schweissmaterialschichten als Beispiel für das verwendete Regelkonzept;
- Fig.5: eine schematische Ansicht zum Auftragsschweissen überhängender Bahnen;
- Fig.6: schematisch ein Beispiel für eine Füllstrategie zur Herstellung eines Werkstückes;
- Fig.7: schematisch die Seitenansicht eines hergestellten Peltonrades;
- Fig.8a,8b,8c: schematisch die Seitenansicht einer Peltonschaufel während dreier unterschiedlicher Stadien der Herstellung;
- Fig.9: schematisch den Querschnitt durch eine Peltonschaufel mit einem Beispiel des Verlaufes einer Schweissmaterialbahn.

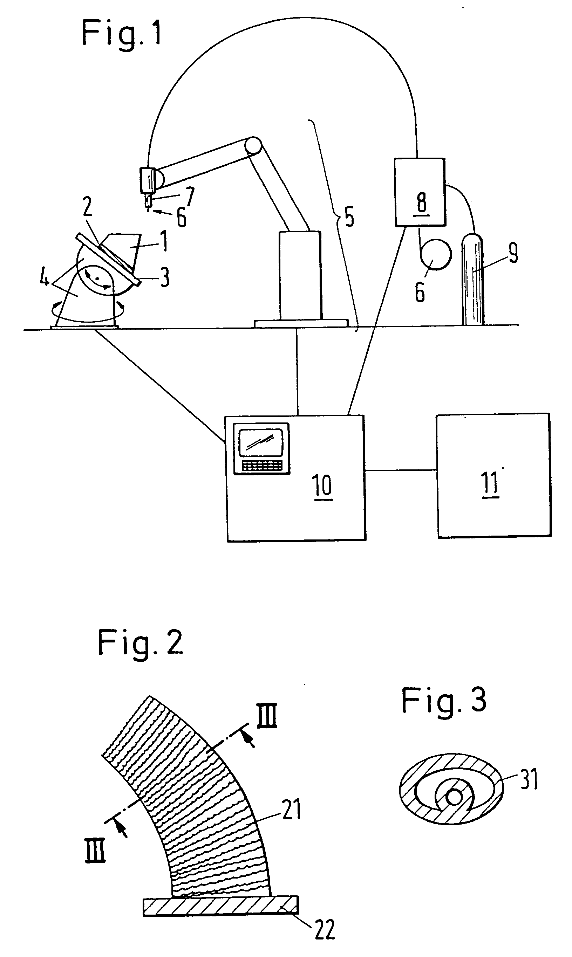

Fig. 1 zeigt die Auftragsschweissvorrichtung zur Herstellung von metallischen Werkstücken.
Das Werkstück 1 wird durch formgebendes Auftragsschweissen auf einen elektrisch leitenden Basiskörper 2 aufgetragen. Der Basiskörper 2 ist entweder ein Bestandteil des endgültigen Werkstückes 1, z.B. eine Habe aus metallischem Material, oder ein Hilfskörper, der in einem folgenden Bearbeitungsschritt vom Werkstück getrennt wird. Eine je nach Anwendung auch kühl- und/oder erwärmbare Einspannvorrichtung 3 fixiert den Basiskörper 2. Das Werkstück kann auch durch andere, nicht dargestellte Vorrichtunge gekühlt oder erwärmt werden, vorzugsweise durch eine Luftdüse zur Kühlung oder einen Gasbrenner zur Erwärmung. Für die Herstellung komplexer Werkstücke 1 kann eine dreidimensional bewegliche Einspannvorrichtung 3 erforderlich sein, die von einer Anlagensteuerung 10 gesteuert wird. Im vorliegenden Beispiel wird ein um zwei Achsen rotatorisch beweglicher Drehtisch als Positioniervorrichtung 4 eingesetzt.

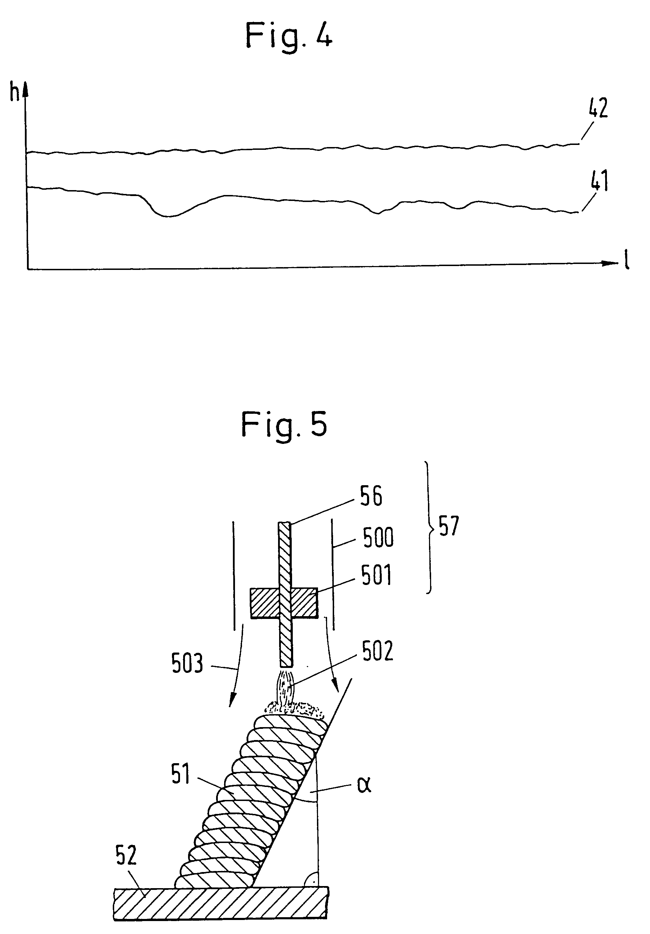

Der Schweissbrenner 7 wird vom Schweissgerät 8 mit Energie, Schweissdraht 6 und Schutzgas 9 versorgt.
Die Anlagensteuerung 10 positioniert mit Hilfe des Roboters 5 den Schweissbrenner 7 und mit Hilfe des Drehtisches das Werkstück 1 derart, dass die Tangente des aufzutragenden, bahnförmigen Schichtelementes vorzugsweise ungefähr horizontal liegt und mit dem Schweissbrenner senkrecht oder in einem Winkelbereich von etwa ± 10° zur Senkrechten leicht stossend oder ziehend geschweisst wird. Zusätzlich regelt die Anlagensteuerung 10 die aufgetragene Schweissmaterialauftragsrate nach einem in Fig. 4 beschriebenen Konzept.
Die Rechneranlage 11 berechnet, ausgehend von einem dreidimensionalen Modell des Werkstückes 1, den bahnförmigen Verlauf der Schweissmaterialschichten, falls erforderlich die Dimension des Basiskörpers 2, sowie eine ungefähre Schweissmaterialauftragsrate und/oder Schweissbahngeschwindigkeit, und übermittelt die Werte der Anlagensteuerung 10.

Aus Fig.2 ist ein Beispiel eines Werkstückes ersichtlich. Auf den Basiskörper 22 wird, vorzugsweise kontinuierlich, Schweissmaterial in bahnförmigen Schichten aufgetragen, sodass der Körper des Werkstückes 21 gebildet wird. Die Oberflächenwelligkeit der unbehandelten Werkstückoberflächen liegt unterhalb ± 1 mm.

Fig. 3 zeigt einen Querschnitt 31 durch das Werkstück 21. Werkstücke bestehend auch aus Ebenen, schiefen Schichten, Vollkörpern, Hohlkörpern und/oder geschlossenen Hohlräumen werden herstellbar, womit durch Freiformschweissen beinahe beliebig geformte Körper herstellbar sind. Die minimal realisierbare Wandstärke des Werkstückquerschnittes 31 beträgt 4 mm für die eingesetzte Lichtbogenschweissvorrichtung, sowie 0,8 mm bei der Verwendung einer Laserstrahlschweissvorrichtung. Beliebig grössere Wandstärken können durch den Auftrag zusätzlicher Schweissmaterialschichten erreicht werden.

Im Diagramm der Fig. 4 wird das Regelkonzept der Anlagensteuerung 10 veranschaulicht, das erlaubt Unregelmässigkeiten bahnförmiger Schichten mit der nächst überdeckenden Schweissmaterialschicht zu kompensieren. Ein Ausschnitt von zwei übereinander liegenden, bahnförmigen Schweissmaterialschichten des Werkstückes 21 (Fig.2) ist dargestellt, wobei als Abszisse die Bahnlänge l der übereinanderliegenden Schichten aufgetragen ist, als Ordinate die gesamthafte Höhe h der Schichten.
Aus Fig. 2 ist ersichtlich, dass die Form des Werkstückes 21 ein nach rechts zunehmender, keilförmiger Schichtdickenverlauf erfordert. Die bahnförmigen Schichten werden vorzugsweise derart aufgetragen, dass die neue Schicht ungefähr horizontal verläuft. Um die Schicht 42 horizontal aufzutragen wurde daher die bestehende Schicht 41 in eine entsprechend keilförmig verlaufende Lage gebracht. Von der Rechneranlage 11 wird der bahnförmige Verlauf der Schweissmaterialschichten sowie die ungefähre Schweissmaterialauftragsrate und/oder Schweissbahngeschwindigkeit im Sinne einer Steuerung vorgegeben. Der Schichthöhenverlauf der untenliegenden Schicht 41, differenzierter ausgedrückt, der Abstand zwischen Kontaktdüse 501 (Fig.5) des Schweissbrenners und der naheliegensten metallischen Werkstückoberfläche, kann von der Anlagensteuerung 10 durch die Messung von Schweissparametern, vorzugsweise Schweissstrom und Schweissspannung, während dem Schweissvorgang kontinuierlich bestimmt werden. Die Anlagensteuerung 10 regelt die Schweissmaterialauftragsrate und/oder die Schweissbahngeschwindigkeit vorzugsweise derart, dass der Abstand zwischen Kontaktdüse 501 und der neu aufgetragenen Schweissmaterialbahn konstant gehalten wird, sodass Unregelmässigkeiten ausgeglichen werden.
Schweissmaterialbahnen werden vorzugsweise in einer Lage um die Horizontale aufgetragen, weil das flüssige Schweissmaterial in dieser Lage bezüglich Unregelmässigkeiten die ausgleichendste Wirkung zeigt. Die Anlagensteuerung 10 ist bestrebt, z.B. während dem nächstfolgenden, horizontalen Auftragsschweissvorgang, dargestellt durch den Schichthöhenverlauf 42, einen konstanten Abstand zwischen Kontaktdüse 501 und der neu aufgetragenen Schweissmaterialbahn einzuhalten, und somit Unregelmässigkeiten wie z.B. Löcher oder eine Keilförmigkeit der bestehenden Schicht 41 durch eine Variation der Schweissmaterialauftragsrate und/oder der Schweissbahngeschwindigkeit auszugleichen, sodass der resultierende Schichthöhenverlauf der neuen Schicht 42 möglichst dem vorgegebenen, vorzugsweise horizontalen Verlauf entspricht. Dieses Regelkonzept gewährleistet, dass die aufgetragene Schweissmaterialbahn dem vorgegebenen Verlauf entspricht, oder, bei auftretenden Abweichungen, mit der nächsten überlagernden Schweissmaterialbahn der Materialauftrag automatisch derart ausgeregelt wird, dass die überlagerte Schweissmaterialbahn möglichst ihrem vorgegebenen Verlauf entspricht, ohne dass eine Rückmeldung an die übergeordnete Rechneranlage (11) erfolgen muss. Vertiefungen oder Löcher mit bis zu 3 mm Tiefe können durch einen erhöhten Schweissmaterialauftrag ausgeglichen werden.

Fig. 5 zeigt einen vertikalen Schnitt durch einen Basiskörper 52 sowie ein Werkstück 51 mit überhängenden, bahnförmigen Schweissmaterialschichten. Ebenfalls gezeigt wird der Schweissbrenner 57 mit der Aussenhülle 500, die den Schweissdraht 56 mit Elektrizität versorgende Kontaktdüse 501, der Lichtbogen 502 mit flüssigem Schweissmaterial sowie angedeutete Strömungsverläufe des Schutzgases 503. Vor der Rechneranlage 11 wird eine ungefäre Schweissmaterialauftragsrate vorgegeben. Die zwischen der Kontaktdüse 501 und dem Werkstück 51 liegende Schweissspannung und der über dem Schweissdraht 56 und dem Lichtbogen 502 fliessende Schweissstrom ermöglichen während dem Schweissvorgang eine kontinuierliche Bestimmung des Abstandes der Kontatkdüse 501 von der Werkstückoberfläche 51, was zur Bestimmung der effektiven Schweissmaterialauftragsrate und/oder Schweissbahngeschwindigkeit dient.
Wird die Schweissmaterialauftragsrate des Schweissbrenners 57 derart dosiert, dass das flüssige Material nicht abfliesst, was durch entsprechende Experimente bestimmt werden kann, so können auf ein maximal horizontal, zweidimensional beweglichen Basiskörper 52 bezüglich der vertikalen Tangente des Werkstückes 51 überhängende Schweissmaterialschichten mit einem Winkel α von bis zu 33° zur Senkrechten ohne Stützkörper erzielt werden. Beliebige überhängende Winkel α können durch entsprechende dreidimensionale Positionierung des Werkstückes 51 erzielt werden.

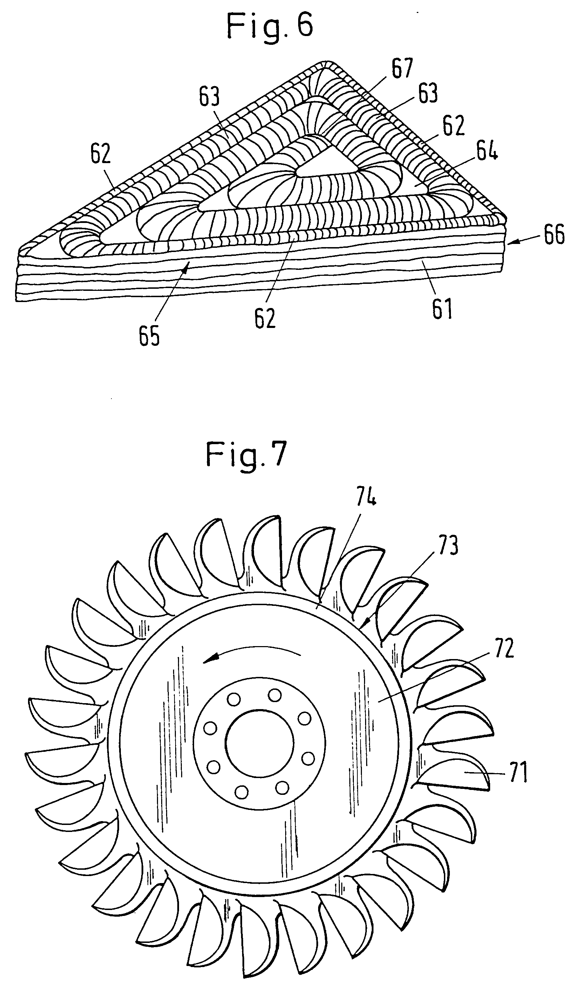

Fig. 6 zeigt ein Beispiel für eine mögliche Füllstrategie zur Herstellung eines Werkstückes. Der dreieckförmige Vollkörper wird aus Schichten 61 aufgebaut. Zur Reduzierung der Oberflächenwelligkeit 65 des Werkstückes sowie zur Erzeugung möglichst eckiger Kanten 66 wird vorteilhafterweise eine dünne, die Werkstückkontur z.B. umfassende Schweissmaterialbahn 62 aufgetragen und die verbleibende Innenfläche mit grösseren Schweissmaterialbahnen 63 gefüllt. Dabei können, zur Verdeutlichung überproportional gross gezeichnet, in jeder Schicht Vertiefungen 64 ohne Schweissmaterialauftrag entstehen. Die nächstfolgende, vorzugsweise beim Endpunkt 67 beginnende, Schweissmaterialbahn wird daher eine zur vorhergehenden Schicht unterschiedliche Füllstrategie aufweisen. Die Fähigkeit der Anlagensteuerung 10, Unregelmässigkeiten im Schichthöhenverlauf auszugleichen, bewirkt, dass Vertiefungen 64 mit der nächstfolgenden Schicht durch Schweissmaterial gefüllt werden und somit ein Vollkörper ohne Löcher herstellbar wird.

Fig. 7 zeigt ein mit dem erfindungsgemässen Verfahren gefertigtes Peltonrad. Als Basiskörper dient eine z.B. geschmiedete Nabe 72. Auf den Basiskörper kann in einem folgenden Arbeitsschritt eine metallisch hochvergütete Zwischenschicht 74 durch Freiformschweissen oder eine andere geeignete Auftragsschweissmethode wie z.B. der Baumkuchenmethode aufgetragen werden. Auf die den Schaufeln zugewandte, leicht vorbearbeitete, Ooberfläche 73 werden die einzelnen Schaufeln 71 verfahrensgemäss durch Freiformschweissen aufgetragen.

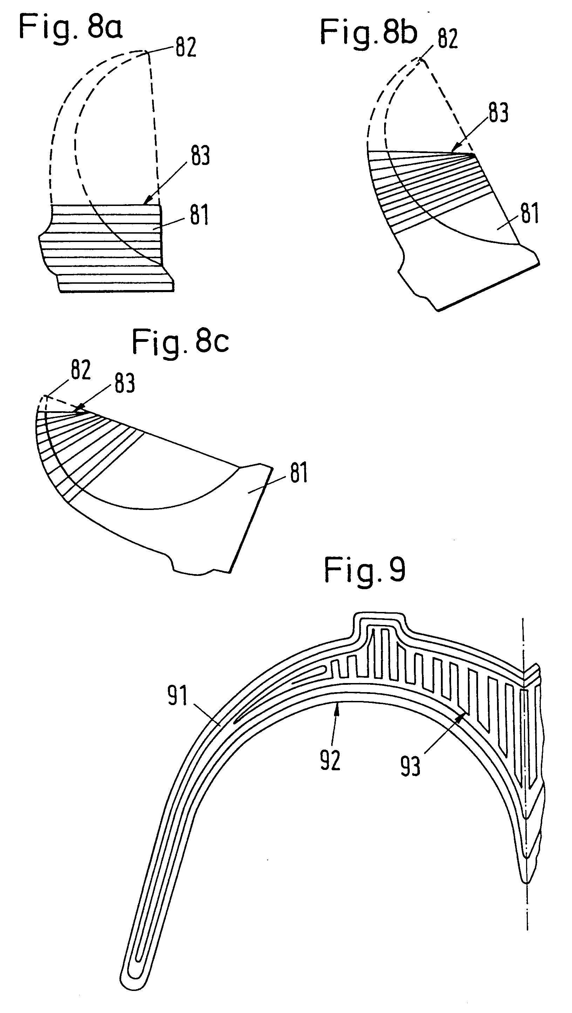

Fig. 8a, 8b und 8c zeigen eine Seitenansicht einer Peltonschaufel während dreier Phasen des Herstellungsprozesses. Das Werkstück 81 wird durch Freiformschweissen in Schichten aufgebeut, wobei die jeweils zuletzt aufzutragende Schicht 83 vorzugsweise horizontal zu liegen kommt, in dem das Werkstück 81 entsprechend geneigt wird. Es werden Schweissmaterialschichten aufgetragen, bis die Form der Peltonschaufel 82 erreicht ist. Während der Herstellung kann durch das frei wählbare Arbeitstempo und andere geeignete Massnahmen, wie z.B. Kühlen, Erwärmen oder Unterbruch des Freiformschweissens, eine zu hohe oder zu tiefe Temperatur der Schaufel vermieden werden und, für die Gefügestruktur wichtig, ähnliche Abkühlbedingungen erreicht werden. Das formgebende Auftragsschweissen kann durch andere Bearbeitungsvorgänge am Werkstück unterbrochen werden, z.B. zur Bearbeitung der Oberfläche mit einem Fräser zu einem Zeitpunkt, da die zu bearbeitenden Oberflächen noch vorteilhaft zugänglich sind. Während der Herstellung eines Peltonrades kann z.B. ein Teil einer Schaufel durch Freiformschweissen erstellt werden und andere Schaufeln des Rades gleichzeitig, z.B. mechanisch, bearbeitet werden.

Fig. 9 zeigt mit einem Querschnitt durch eine Peltonschaufel ein Beispiel eines möglichen Verlaufes einer Schweissmaterialbahn auf einer Schweissmaterialschicht.
Nebst die Werkstückkontur begrenzende Bahnen 92 können beliebig geformte Bahnen 91, 93 aufgetragen werden. Die von der Rechneranlage 11 festgelegte Füllstrategie für das softwaremässige zwei- oder dreidimensionale Datenmodell des Werkstückes erlaubt eine Vielzahl möglicher Füllstrategien, sodass die mit Fig. 8 dargestellte Strategie der Schichtbildung sowie der mit Fig. 9 dargestellte Verlauf einer Schweissmaterialbahn nur als Beispiele einer möglichen Realisierung zu betrachten sind. Nicht nur ebene, sondern auch dreidimensionale Schicht- und Bahnverläufe können realisiert werden.

## Patentansprüche

1. Verfahren zur Herstellung von metallischen Werkstücken mit einer Schweissvorrichtung wobei das Werkstück (1;21) in Schichten aus Schweissmaterialbahnen sowie ohne eine stützende Hilfsvorrichtung aufgebaut wird, derart,
dass mit einem Rechenprogramm das Volumenmodell des Körpers eines Werkstuckes (1;21) in einen Basiskörper (2;22;72) und eine Vielzahl von Schichten zerlegt wird, woraus die Schweissstrategie d.h. Schweissmaterialbahn und/oder Schweissmaterialauftragsrate und/oder Schweissbahngeschwindigkeit und/oder die gegenseitige Lage von Schweisszone und Werkstück berechnet werden,
und dass das Schweissmaterial mit der Schweissvorrichtung von der Oberfläche eines Basiskörpers (2;22;72) ausgehend aufgetragen wird, wobei mit einer Steuer- oder Regelvorrichtung die gegenseitige Lage von der Schweisszone der Schweissvorrichtung und aufgetragenen Werkstückschichten (1;21) bzw. Basiskörper (2;22;72) und/oder die Schweissmaterialauftragsrate und/oder die Schweissbahngeschwindigkeit laufend bestimmt werden, derart, dass das Werkstück (1;21) aus Schweissmaterial aufgebaut wird.

2. Verfahren nach Anspruch 1, dadurch gekennzeichnet, dass als Schweissvorrichtung eine Lichtbogenschweissvorrichtung, insbesondere eine Vorrichtung mit Metall-Inert-Gas (MIG), eingesetzt wird.

3. Verfahren nach Anspruch 1, dadurch gekennzeichnet, dass als Schweissvorrichtung eine Laserstrahlschweissvorrichtung eingesetzt wird.

4. Verfahren nach Anspruch 2, dadurch gekennzeichnet, dass Unebenheiten bahnförmiger Schichten (41) mit der nächsten überdeckenden Schweissmaterialschicht (42) detektiert werden, indem der Schichthöhenverlauf der untenliegenden Schicht (41) durch die Messung von Schweissparametern, vorzugsweise Schweissstrom und Schweissspannung, während dem Schweissvorgang kontinuierlich bestimmt wird.

5. Verfahren nach einem der Ansprüche 1 bis 4, dadurch gekennzeichnet, dass Unebenheiten bahnförmiger Schichten detektiert und die Schweissmaterialauftragsrate und/oder die Schweissbahngeschwindigkeit derart korrigiert wird, dass die Unebenheiten ausgeglichen werden.

6. Verfahren nach einem der Ansprüche 1 bis 5, dadurch gekennzeichnet, dass die Umrandungen des Werkstückes (1;21) mit einer reduzierten Schweissmaterialauftragsrate erstellt werden.

7. Verfahren nach einem der Ansprüche 1 bis 6, dadurch gekennzeichnet, dass die Schweissmaterialbahnen mäandrierend verlaufend aufgetragen werden.

8. Vorrichtung zur Durchführung des Verfahrens nach einem der Ansprüche 1 bis 7, umfassend einen Roboter (5) mit einer daran befestigten Schweissvorrichtung (7), eine Positioniervorrichtung (4) auf welcher ein Basiskörper (2) befestigbar ist, sowie eine Anlagensteuerung (10), welche die gegenseitige Lage von Schweisszone und aufgetragenen Werkstückschichten bzw. Basiskörper (2) und/oder die Schweissmaterialauftragsrate und/oder die Schweissbahngeschwindigkeit kontinuierlich erfasst und regelt, derart, dass das Werkstück (1) sich aus Schweissmaterial aufgebaut, oder umgekehrt, in dem Sinne, dass der Basiskörper (2) auf dem Roboter (5) befestigbar und der Schweissbrenner (7) auf der Positioniervorrichtung (4) angebracht ist.

9. Vorrichtung nach Anspruch 8, gekennzeichnet durch eine als Laserstrahlschweissvorrichtung ausgebildete Schweissvorrichtung (7) und einen mechanischen oder optischen Sensor zum Detektieren von Unregelmässigkeiten bestehender Schweissmaterialbahnen, wobei der Sensor mit der Anlagesteuerung (10) verbunden ist.

10. Vorrichtung nach Anspruch 8, gekennzeichnet durch eine als Lichtbogenschweissvorrichtung ausgebildete Schweissvorrichtung (7), wobei die Anlagensteuerung (10) eine Vorrichtung zum Messen von Schweissparametern, vorzugsweise Schweissstrom und Schweissspannung, aufweist.

11. Vorrichtung nach einem der Ansprüche 8 bis 10, dadurch gekennzeichnet, dass eine Rechneranlage (11) die geometrischen Daten und die Schweissdaten zur Herstellung des Werkstückes (1;21) der untergeordneten Anlagensteuerung (10) übermittelt.

12. Peltonrad, einstückig ausgebildet mit einer Nabe (72) und Schaufeln (71), erhältlich durch ein Verfahren nach einem der Ansprüche 1 bis 7, gekennzeichnet durch eine Nabe (72) und/oder mindestens eine Schaufel (71) mit einem Aufbau von Schichten aus Schweissmaterialbahnen.

13. Peltonrad gemäss Anspruch 12, dadurch gekennzeichnet, dass die Nabe (72) als eine geschmiedete Nabe (72) ausgestaltet ist.

## Claims

1. A method of production of metal workpieces by a welding equipment,
the workpiece (1;21) being built up in layers from runs of weld material and also with an auxillary supporting device, by a model of the body volume of a workpiece (1;21) being dissected by a computer programme into a foundation body (2;22;72) and a plurality of layers, from which the welding strategy, i.e., the run of weld material and/or the rate of application of weld material and/or the speed of the welding run and/or the mutual positions of the welding zone and workpiece are calculated, and that the weld material is applied by the welding equipment, starting from the surface of a foundation body (2;22;72), the mutual positions of the welding zone of the welding equipment and the applied layers (1;21) of the workpiece or respectively the foundation body (2;22;72) and/or the rate of application of weld material and/or the speed of the welding run being determined continuously by a control or regulating equipment in such a way that the workpiece (1;21) is built up of weld material.

2. A method as in Claim 1, characterized in that
an arc welding equipment, especially an equipment with metal electrode inert gas (MIG) is used as the welding equipment.

3. A method as in Claim 1, characterized in that
a laser beam welding equipment is used as the welding equipment.

4. A method as in Claim 2, characterized in that
unevennesses in the runs forming the layers (41) with the covering layer (42) of weld material immediately above are detected by the trend in layer height of the underlying layer (41) being continuously determined during the welding process through the measurement of welding parameters, preferably welding current and welding voltage.

5. A method as in one of the Claims 1 to 4, characterized in that
unevennesses in the runs forming the layers are detected and the rate of application of weld material and/or the speed of the welding run are corrected in such a way that the unevennesses are levelled out.

6. A method as in one of the Claims 1 to 5, characterized in that
the borders of the workpiece (1;21) are produced by a reduced rate of application of weld material.

7. A method as in one of the Claims 1 to 6, characterized in that
the runs of weld material are applied with a continuous meander.

8. An equipment for the performance of the method as in one of the
Claims 1 to 7, comprising a robot (5) with a welding equipment (7) fastened to it, a positioning equipment (4) to which may be fastened a foundation body (2), as well as a system control (10) which continuously detects and regulates the mutual positions of the welding zone and the layers applied to the workpiece or of the foundation body (2) respectively and/or the rate of application of weld material and/or the speed of the welding run in such a way that the workpiece (1) is built up of weld material, or the other way about in the sense that the foundation body (2) may be fastened to the robot (5) and the welding torch (7) is fitted to the positioning equipment (4).

9. An equipment as in Claim 8, characterized by a welding equipment (7)
made as a laser beam welding equipment, and a mechanical or optical sensor for detecting irregularities in existing runs of weld material, the sensor being connected to the system control (10).

10. An equipment as in Claim 8, characterized by a welding equipment (7)
made as an arc welding equipment, the system control (10) exhibiting a device for measuring welding parameters, preferably welding current and welding voltage.

11. An equipment as in one of the Claims 8 to 10, characterized in that
a computer system (11) transmits the geometrical data and the welding data for the production of the workpiece (1;21) to the subordinate system control (10).

12. A Pelton wheel made in one piece with a hub (72) and buckets (71),
obtainable by a method as in one of the Claims 1 to 7, characterized by a hub (72) and/or at least one bucket (71) having a build-up of layers from runs of weld material.

13. A Pelton wheel in accordance with Claim 12, characterized in that
the hub (72) is developed as a forged hub (72).

## Revendications

1. Procédé de fabrication de pièces métalliques avec un dispositif de soudage, la pièce (1;21) étant réalisée en couches à partir de bandes de matériau de soudage ainsi que sans dispositif auxiliaire de support de telle sorte que par un programme de calcul, le modèle volumique du corps d'une pièce (1;21) est décomposé en un corps de base (2;22;72) et un grand nombre de couches, à partir duquel étant calculé la stratégie de soudage, c'est-à-dire la bande de matériau de soudage et/ou la vitesse d'application de matériau de soudage et/ou la vitesse de la bande de soudage et/ou la position mutuelle de la zone de soudage et de la pièce, et en ce que le matériau de soudage est appliqué au moyen du dispositif de soudage en partant de la surface d un corps de base (2;22;72), où l'on détermine par un dispositif de commande ou de réglage la position mutuelle de la zone de soudage du dispositif de soudage et des couches de matériau appliquées (1;21) respectivement du corps de base (2;22;72) et/ou la vitesse d'application du matériau de soudage et/ou la vitesse de la bande de soudage d'une manière continue de façon que la pièce (1;21) soit constituée de matériau de soudage.

2. Procédé selon la revendication 1, caractérisé en ce qu'on utilise comme dispositif de soudage un dispositif de soudage à l'arc, notamment un dispositif avec du gaz inerte-métal (MIG).

3. Procédé selon la revendication 1, caractérisé en ce qu'on utilise comme dispositif de soudage un dispositif de soudage au laser.

4. Procédé selon la revendication 2, caractérisé en ce que des inégalités de couches en forme de bande (41) sont détectées par la couche suivante de matériau de soudage (42) qui recouvre, en déterminant continuellement l'allure de la hauteur de la couche située en dessous (41) par la mesure de paramètres de soudage, de préférence du courrant de soudage et de la tension de soudage pendant l'opération de soudage.

5. Procédé selon l'une des revendications 1 à 4, caractérisé en ce que des inégalités de couches en forme de bande sont détectées et que la vitesse d'application du matériau de soudage et/ou la vitesse de la bande de soudage est corrigée de façon à égaliser les inégalités.

6. Procédé selon l'une des revendications 1 à 5, caractérisé en ce que les bords de la pièce (1,21) sont réalisés à une vitesse d'application de matériau de soudage réduite.

7. Procédé selon l'une des revendication 1 à 6, caractérisé en ce que les bandes de matériau de soudage sont appliquées selon une allure de méandre.

8. Dispositif pour la mise en oeuvre du procédé selon l'une des revendications 1 à 7, comportant un robot (5) avec un dispositif de soudage (7) fixé à celui-ci, un dispositif de positionnement (4) sur lequel peut être fixé un corps de base (2) ainsi qu'une commande (10) de l'installation qui détecte et règle d'une manière continue la position mutuelle de la zone de soudage et de couches de pièce appliquées respectivement du corps de base (2) et/ou la vitesse d'application du matériau de soudage et/ou la vitesse de la bande de soudage de telle sorte que la pièce (1) est constituée de matériau de soudage, ou inversement dans le sens où le corps de base (2) peut être fixé sur le robot (5) et le chalumeau (7) est disposé sur le dispositif de positionnement (4).

9. Dispositif selon la revendication 8, caractérisé par un dispositif de soudage (7) réalisé sous forme de dispositif de soudage au laser et par un capteur mécanique ou optique pour detecter des irrégularités de bandes de matériau de soudage existentes, le capteur étant relié à la commande (10) de l'installation.

10. Dispositif selon la revendication 8, caractérisé par un dispositif de soudage (7) réalisé comme dispositif de soudage à l'arc (7), l'installation (10) de la commande présentant un dispositif pour mesurer des paramètres de soudage, de préférence le courant de soudage et la tension de soudage.

11. Dispositif selon l'une des revendications 8 à 10, caractérisé en ce qu'une installation de calcul (11) transmet les données géométriques et les données de soudage pour fabriquer la pièce (1;21) à la commande (10) de l'installation dépendante.

12. Roue Pelton, réalisée en une pièce avec un moyeu (72) et des auges (71), pouvant être obtenue par un procédé selon l'une des revendication 1 à 7, caractérisée par un moyeu (72) et/ou au moins une auge (71) avec une constitution de couches en bande de matériau de soudage.

13. Roue Pelton selon la revendication 12, caractérisée en ce que le moyeu (72) est réalisé sous forme de moyeu forgé (72).
